# EUROPEAN PATENT SPECIFICATION

(11) **EP 0 560 242 B1**
(45) Date of publication and mention of the grant of the patent: **29.05.1996**
(21) Application number: 93103651.1
(22) Date of filing: 08.03.1993
(51) Int. Cl.: B62D 7/14

(54) **Rear wheel steering for a car with an omega-shaped rear axle**
Hinterradlenkung für ein Fahrzeug mit einer omegaförmigen Hinterachse
Direction de roues arrières pour une voiture avec un essieu-arrière en forme d'oméga

(30) Priority: 10.03.1992 IT TO920200
(43) Date of publication of application: 15.09.1993
(73) Proprietor: FIAT AUTO S.p.A., I-10135 Torino (IT)
(72) Inventor: Gandiglio, Romolo, I-10020 Cambiano (Torino) (IT)
(74) Representative: Quinterno, Giuseppe

(56) References cited:
- EP-A- 0 284 022
- EP-A- 0 286 073
- EP-A- 0 337 956
- EP-A- 0 438 987
- GB-A- 2 213 114
- PATENT ABSTRACTS OF JAPAN, unexamined applications, M field, vol. 13, no. 455, October 13, 1989 THE PATENT OFFICE JAPANESE GOVERNMENT page 14 M 879

## Description

The present invention relates in general to motor cars with four-wheel steering.

More particularly, the invention relates to a mechanism for steering the rear wheels of a motor car with four-wheel steering and a read suspension with an omega-shaped axle, including a front steering unit and a rear steering unit interconnected by a transmission unit.

Steering mechanisms of this type include, as rear steering units, devices of known type, for example, those described in European patent applications EP-A-0 337 956 and EP-A-0 438987.

In such a known device, the rear steering unit has an input shaft which is adapted to be coupled for rotation with the front steering unit by means of a longitudinal transmission shaft which allows the direct mechanical operation of the rear steering unit in dependence on the operation of the front steering unit.

The use of a transmission shaft for operating the rear steering unit of a motor car with four-wheel steering and a rear suspension with an omega-shaped axle is particularly difficult, because of the structural obstruction caused by the load-hearing structure of the axle which extends transversely between the two wheels of the motor car and has a central portion connected to the chassis.

GB-A-2 213 114 shows a steering mechanism having the features of the preamble of claim 1. In this known mechanism the front and rear steering units are interconnected by a transmission unit comprising a first transmission shaft which is connected to the front steering unit and a second transmission shaft which is connected to the rear steering unit. The first and second transmission shafts are connected by a rigid joint. Although the first transmission shaft is disclosed as including universal joints, the rigid connection between the first and the second transmission shaft determines a substantially high vertical movement of the first transmission shaft during the suspension movement of the rear axle.

The object of the present invention is to provide a steering mechanism of the type indicated above which is simple and cheap to produce and which is not affected by the above disadvantage.

According to the invention this object is achieved by a steering mechanism according to claim 1.

According to another characteristic of the invention, the second transmission shaft is housed rotatably in a tubular support including a front portion which is fixed directly to the omega-shaped axle and a rear portion which is fixed to the omega-shaped axle by means of a support bracket.

The invention will now be described with particular reference to the appended drawings, in which:
Figure 1 is a schematic plan view of the steering members of a motor car with four-wheel steering,
Figure 2 is a view of the rear portion of the steering system, taken on the arrow II of Figure 1, on an enlarged scale,

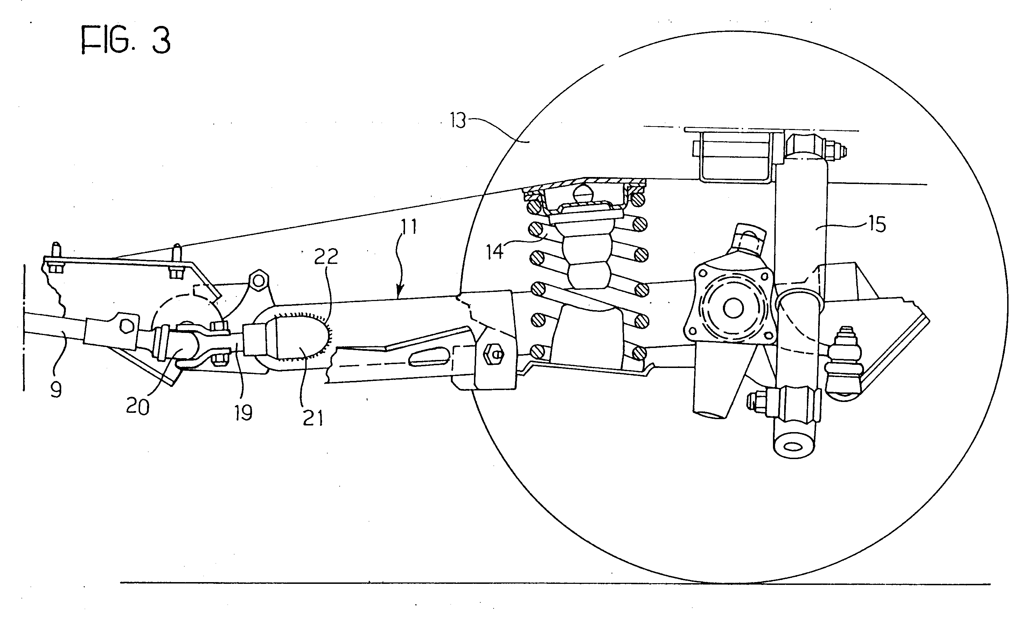

Figure 3 is a side view taken on the arrow III of Figure 2, on an enlarged scale.

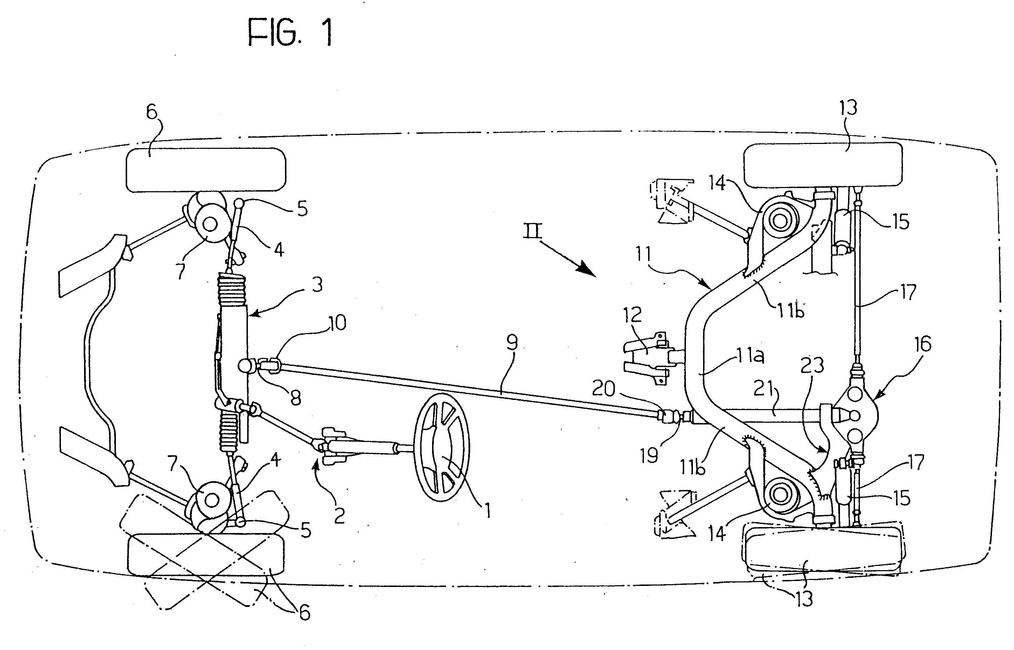

With reference to Figure 1, a steering system is operated by the rotation of a steering wheel 1 which is connected, by means of a known kinematic chain 2, to a front steering unit 3 of known type which transmits the rotation imparted by the steering wheel 1 through tie-rods 4 and steering joints 5 to the front wheels 6 which are connected to the chassis of the motor car by means of front suspension units 7. The front steering unit includes an output shaft 8 which extends rearwardly and is rotatable about an axis substantially parallel to the longitudinal axis of the motor car.

A first transmission shaft 9 is connected to the output shaft 8 by means of an articulated joint 10 and extends substantially over the entire distance between the front steering unit 3 and the front portion 11a of an omega-shaped axle 11 of the rear suspension of the motor car. The transmission shaft 9 is inclined at a predetermined angle to the longitudinal axis of the motor car so that its rear end 9a is offset sideways from the centreline of the vehicle, towards its left-hand side in the embodiment illustrated.

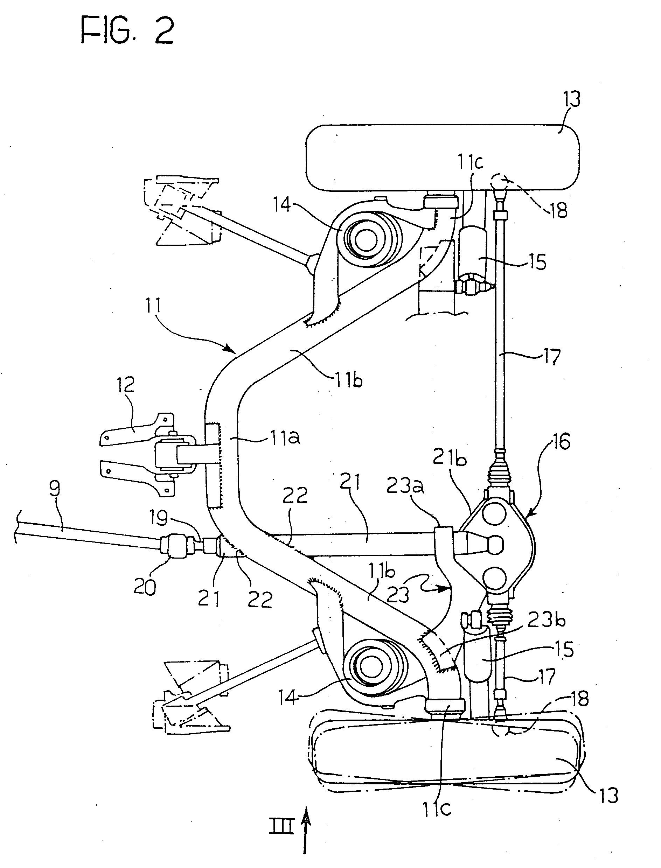

As can be seen more clearly in Figure 2, the omega-shaped axle 11 is articulated about a transverse axis on a mounting 12 for fixing to the chassis of the motor vehicle. Two side arms 11b extend from the front portion 11a of the omega-shaped axle 11, symmetrically with respect to the central plane of the motor vehicle, and are inclined both to a horizontal plane and to the vertical plane which passes through the axis of symmetry of the vehicle.

The end 11c of each of the arms 11b remote from the portion 11a is bent so as to extend transversely outwardly of the vehicle for steerably supporting one of the rear wheels 13 in known manner.

A rear suspension unit formed by springs 14 and shock-absorbers 15 connects the omega-shaped axle 11 yieldingly to the chassis of the motor car in known manner.

A rear steering unit 16 such as, for example, that described in the patent application EP-A-0 337 956 mentioned above is intended to steer the rear wheels 13 by means of a connection formed by tie-rods 17 and steering joints 18. The rear steering unit 16 is disposed to one side of the central axis of the vehicle, in particular, on the left-hand side in the embodiment illustrated in the drawings.

The input shaft (not shown) of the rear steering unit 16 is coupled to the rear end of a transmission shaft 19 the axis of which lies in the plane identified by the axes of the arms 11b. The front end of the transmission shaft 19 is connected to the rear end of the transmission shaft 9 by an articulated joint 20.

The transmission shaft 19 is supported rotatably within a tubular support 21 which extends substantially along the entire length of the shaft 19 and which has a front portion 21a and a rear portion 21b. The front portion 21a is housed in a through-hole in the rear axle 11 near the region connecting the portion 11a and the arm 11b on the side of the vehicle on which the rear steering unit is situated, in this case, to the left of the centreline. The portion 21a of the tubular support 21 is fixed to the omega-shaped rear axle 11 by a weld 22.

The rear portion 21b of the tubular support 21 is connected to one end 23a of a bracket 23 of a shape which is also suitable for performing other supporting functions such as, for example, the securing of the rear steering unit 16. The end 23b of the bracket 23 opposite its end 23a is welded to the omega-shaped axle 11 near the end portion 11c thereof, on the left-hand side of the centreline in the embodiment illustrated. The transmission shaft 19 is positioned within the tubular support 21 by known means such as, for example, ball bearings, plain bearings or any other means suitable for allowing relative rotation between the transmission shaft and the tubular support.

The operation of the steering wheel 1 results not only in the steering of the front wheels 6 by means of the front steering unit 3, but also in the rotation of the output shaft 8 which transmits the rotary movement to the transmission shaft 9 by means of the articulated joint 10. This rotary movement is transmitted by the articulated joint 20 to the transmission shaft 19 which in turn rotates the input shaft of the rear steering unit 16, consequently steering the rear wheels 13 of the motor car. Any jolting of the motor car in motion, causing relative movements between the front steering unit 3, the chassis of the motor car and the rear steering unit 16, does not adversely affect the correct operation of the rear steering unit 16 since both the steering unit and the transmission shaft 19 are connected firmly to the omega-shaped axle 11 and are connected to the front steering unit 3 in an articulated manner.

Naturally, the principle of the invention remaining the same, the details of construction and forms of embodiment may be varied widely with respect to those described and illustrated purely by way of example, without thereby departing from the scope of the present invention, such as defined by the claims.

## Claims

1. A mechanism for steering the rear wheels of a motor car with four-wheel steering and a rear suspension with an omega-shaped axle (11), including a front steering unit (3), a rear steering unit (16) and a transmission unit (9, 10, 19, 20) interconnecting the first (3) and the second steering unit (16), the transmission unit comprising:
- a first transmission shaft (9) which is connected to the front steering unit (3) by means of a first articulated joint (10), and
- a second transmission shaft (19) which is connected to the rear steering unit (16) and to the first transmission shaft (9) by means of a second joint (20),
characterised in that:
- the omega-shaped axle (11) is articulated to the chassis of the vehicle about a transverse axis,
- the second transmission is supported for rotation by the omega-shaped axle (11), and that
- said second joint is an articulated joint (20) which is located in correspondence with the articulation axis of the omega-shaped axle (9) to the chassis of the vehicle.

2. A steering mechanism according to Claim 1, characterised in that the second transmission shaft (19) is housed rotatably in a tubular support (21) including a front portion which is fixed directly to the omega-shaped axle and a rear portion which is fixed to the omega-shaped axle by a support bracket (23).

3. A steering mechanism according to Claim 2, characterised in that the front portion of the tubular support (21) is mounted in a through-hole in the structure of the omega-shaped axle (11).

4. A steering mechanism according to Claim 2 or Claim 3, characterised in that the support bracket (23) is intended to be connected rigidly to the rear steering unit (16).

## Patentansprüche

1. Mechanismus zum Lenken der Hinterräder eines Kraftfahrzeuges mit Vierradlenkung und einer hinteren Aufhängung mit einer omegaförmigen Achse (11), umfassend eine vordere Lenkeinheit (3), eine hintere Lenkeinheit (16) und eine die erste (3) und die zweite Lenkeinheit (16) verbindende Getriebeeinheit (9, 10, 19, 20), wobei die Getriebeeinheit umfaßt:
- eine erste Getriebewelle (9), welche durch eine erste gelenkige Verbindung (10) mit der vorderen Lenkeinheit (3) verbunden ist, und
- eine zweite Getriebewelle (19), welche mit Hilfe einer zweiten Verbindung (20) mit der hinteren Lenkeinheit (16) und der ersten Getriebewelle (9) verbunden ist,
dadurch gekennzeichnet, daß
- die omegaförmige Achse (11) mit dem Fahrgestell des Fahrzeuges um eine querverlaufende Achse gelenkig verbunden ist,
- die zweite Getriebewelle drehbar an der omegaförmigen Achse (11) gelagert ist, und daß
- die genannte zweite Verbindung eine gelenkige Verbindung (20) ist, welche in Übereinstimmung mit der Gelenksachse der omegaförmigen Achse (11) am Fahrgestell des Fahrzeuges angeordnet ist.

2. Lenkmechanismus nach Anspruch 1, dadurch gekennzeichnet, daß die zweite Getriebewelle (19) drehbar in einem rohrförmigen Träger (21) untergebracht ist, der einen vorderen, an der omegaförmigen Achse direkt befestigten Abschnitt und einen hinteren, an der omegaförmigen Achse mit Hilfe eines Stützarmes (23) befestigten Abschnitt aufweist.

3. Lenkmechanismus nach Anspruch 2, dadurch gekennzeichnet, daß der vordere Abschnitt des rohrförmigen Trägers (21) in einem Durchgangsloch in der Konstruktion der omegaförmigen Achse (11) angebracht ist.

4. Lenkmechanismus nach Anspruch 2 oder Anspruch 3, dadurch gekennzeichnet, daß der Stützarm (23) mit der hinteren Lenkeinheit (16) starr verbindbar ist.

## Revendications

1. Mécanisme pour diriger les roues arrière d'un véhicule automobile comportant une direction par les quatre roues et une suspension arrière présentant un essieu (11) en forme d'oméga, comprenant une unité de direction avant (3), une unité de direction arrière (16) et une unité de transmission (9, 10, 19, 20) qui interconnecte la première unité de direction (3) et la deuxième unité de direction (16), l'unité de transmission comprenant :
- un premier arbre de transmission (9) qui est relié à l'unité de direction avant (3) au moyen d'un premier joint articulé (10), et
- un deuxième arbre de transmission (19) qui est relié à l'unité de direction arrière (16) et au premier arbre de transmission (9) au moyen d'un deuxième joint (20),
caractérisé en ce que :
- l'essieu (11) en forme d'oméga est articulé au châssis autour d'un axe transversal,
- la deuxième transmission est supportée pour la rotation par l'essieu (11) en forme d'oméga, et en ce que
- le deuxième joint est un joint articulé (20) qui est situé au droit de l'axe d'articulation de l'essieu (11) en forme d'oméga par rapport au châssis du véhicule.

2. Mécanisme de direction selon la revendication 1, caractérisé en ce que le deuxième arbre de transmission (19) est logé rotatif dans un support tubulaire (21) comprenant une portion avant qui est fixée directement à l'essieu en forme d'oméga et une portion arrière qui est fixée à l'essieu en forme d'oméga par une ferrure support (23).

3. Mécanisme de direction selon la revendication 2, caractérisé en ce que la portion avant du support tubulaire (21) est montée dans un trou traversant ménagé dans la structure de l'essieu (11) en forme d'oméga.

4. Mécanisme de direction selon la revendication 2 ou la revendication 3, caractérisé en ce que la ferrure support (23) est conçue pour être assemblée rigidement à l'unité de direction arrière (16).
